## Europäisches Patentamt

## European Patent Office

## Office européen des brevets

(11) Publication number: **0 115 111**
**B1**

(12) **EUROPEAN PATENT SPECIFICATION**

(45) Date of publication of patent specification: **17.12.86**

(21) Application number: **83300445.0**

(22) Date of filing: **28.01.83**

(51) Int. Cl.⁴: **B 32 B 15/08,** B 65 D 35/08, C 09 J 3/14

(54) **Laminates incorporating a polyacrylic-acid complex primer, packaging or containers made therefrom, and manufacture of said laminates.**

(43) Date of publication of application:
**08.08.84 Bulletin 84/32**

(45) Publication of the grant of the patent:
**17.12.86 Bulletin 86/51**

(84) Designated Contracting States:
**AT BE CH DE FR GB IT LI LU NL SE**

(56) References cited:
**FR-A-2 165 980**
**US-A-3 260 777**
**US-A-3 616 191**

(73) Proprietor: **AMERICAN CAN COMPANY**
**American Lane P.O. Box 3610**
**Greenwich, Connecticut 06836-3610 (US)**

(72) Inventor: **Middleton, Scott W.**
**2422 E. Bona Avenue**
**Appleton Wisconsin 54911 (US)**

(74) Representative: **Harvey, David Gareth et al**
**Graham Watt & Co. Riverhead**
**Sevenoaks Kent TN13 2BN (GB)**

The file contains technical information submitted after the application was filed and not included in this specification

Courier Press, Leamington Spa, England.

## Description

The present invention relates to laminate webs incorporating a polyacrylic acid complex primer, their applications for packaging or containers, and method of manufacture of the webs. The invention comprehends containers or packages made from the said webs when filled with a degenerative product such as a dentifrice which may include a fluoride anti-caries agent.

Tubes and other containers made of laminated webs, that are fabricated from a metal foil and layers of synthetic resinous materials, are widely used for the packaging of a variety of products, such as toothpaste. See, for example, US—A—3,260,777; US—A—3,347,419 and US—A—3,505,143 all assigned to American Can Company, of Greenwich, Connecticut, which Company markets such tubular containers under its GLAMINATE trademark. By properly designing and constructing the laminate, oxygen and moisture barrier properties necessary for the containment of many commodities are obtained, as are the heat sealability and dead fold characteristics that are desirable in a tube-like package. Typically, the product side of the laminate web will comprise an olefinic polymer such as low density polyethylene, ethylene-acrylic acid copolymer (EAA) or Surlyn ionomer, bonded to the inner surface of the metal layer, which is normally aluminium foil. See US—A—3,260,777. SURLYN is a Registered Trade Mark.

Although containers so constructed are entirely satisfactory under most circumstances, the ingredients of certain products have a tendency to degrade or otherwise attack the materials of construction, causing failure of the container. Certain dentifrice products are notoriously difficult to package in such a laminate web structure, particularly those that contain stannous or sodium fluoride as an anticaries agent. Due to the acid environment and/or the essential flavouring oils and detergents that are present, there is a strong tendency for ingredients of the toothpaste to permeate the inner plastic layer, and to migrate to the metal interface, thereby promoting delamination in the web structure and causing deterioration of the contained product. Of course, the longer the period of storage the more pronounced will be the tendency for degeneration to occur in the laminate web, and particularly so if the package is stored at a relatively elevated temperature.

Various measures have been taken in the past not only to enhance the initial level of adhesion achieved between the plastic film and the foil, but also to improve resistance to delamination over extended storage periods, i.e. to extend shelf life. These efforts include flame treatment of the foil, the utilization of interlayers of various adhesive materials, and chemical priming of the metal to increase the strength of the bond at the interface. For the manufacture of dispensing tubes, US—A—3,347,419 discloses the use of adhesive interlayers comprising olefinic copolymers between aluminium foil and a polyolefinic inner layer, generally low density polyethylene. Similarly, US—A—3,505,143 and US—A—3,616,191 disclose the application of olefinic primers on aluminium foil prior to laminating polyethylene thereto. For laminating polyethylene specifically to aluminium, Mica Corporation Product Information literature discloses the use of Mica A—291, this being a polyacrylic acid chromium complex product. Laminate structures so produced have been used for the packaging of alcohol-saturated swabs. While the utilization of such a primer is seen to significantly enhance bond strength, the packaging structure is still not entirely satisfactory on long-term storage. The use of polyethylene and the product-facing layer may be undesirable in some instances, due to the tendency of that material to show environmental stress cracking in the presence of certain products such as toothpaste.

Accordingly, it is a primary object of the present invention to provide a laminate web, suitable for making containers and packages, and comprised of aluminium foil and a layer of a copolymer of ethylene with an acrylic acid or acrylic acid ester monomer, which web is adapted for use to contain degenerative products for extended periods of time.

According to the present invention, there is provided a laminate web suitable for use in producing containers for generative products, which includes metal, e.g. aluminium, foil, wherein laminated to the foil there is a film of a copolymer of ethylene having in its molecule pendant carboxylic acid or ester groups, and wherein at least a monomolecular layer of a polyacrylic acid transistion metal complex primer is disposed at the interface between the foil and the film.

Also according to the present invention, there is provided a method for the production of a laminate web suitable for use in producing containers for degenerative products, the steps including: depositing upon at least one surface of a metal, e.g. aluminium, foil substrate at least a monomolecular layer of a polyacrylic acid transition metal complex primer from an aqueous alcoholic solution, heating the thus-coated substrate to substantially dry the primer; extrusion coating a film of a copolymer of ethylene upon the primed surface, or upon at least one of the primed surfaces, of the foil, the copolymer having pendant carboxylic acid or ester groups in its molecule; and cooling the laminate to provide the web.

The primary object of the invention is readily attained by laminating the ethylenic copolymer to aluminium foil, preferably employing as the primer a polyacrylic acid chromium complex primer. In preferred embodiments of the web, the copolymer of the film will be selected from the group consisting of poly(ethylene/acrylic acid), poly(ethylene/methacrylic acid), poly(ethylene/methylacrylate), poly(ethylene/ methyl methacrylate), poly(ethylene/vinyl acetate), and ionomer resins. The primer coating can be significantly thicker than a monomolecular layer. The web will generally comprise at least one additional layer: normally it will include at least one synthetic resinous polymer layer disposed upon the side of the foil opposite to that upon which the primer is applied.

To make the web, at least a monomolecular layer of a polyacrylic acid chromium complex primer, formulated as an aqueous alcoholic solution, is deposited upon at least one side of an aluminium foil substrate. The coated substrate is thereafter heated substantially to dry the primer. Following this, a film of a copolymer of ethylene (as described above) is extrusion coated upon the primed surface, preferably using the copolymer melt at a temperature of 288 to 310°C (550° to 600° Fahrenheit), and most desirably at a temperature of 301° to 316°C (575° to 590° Fahrenheit).

A container for a degenerative product fabricated from the laminate web will have the copolymer film disposed on the product side thereof. The container may be a toothpaste tube filled with a degenerative dentrifice substance containing a fluoride anticaries agent and/or one or more essential oils. The container may thus be in the form of a tube having a headpiece bonded within one end of the tubular structure; the headpiece generally being made of a polyolefin resin, such as high density polyethylene.

The invention will now be described in more detail by way of example only.

As noted initially, foil/ethylene copolymer laminate webs have previously been used in fabricating containers. The present invention provides means by which the strength of the bond between the foil and a copolymer layer on the product side is greatly enhanced, and is rendered substantially less susceptible to degenerative ingredients that may migrate to the interface.

The chrome complexes that are utilized to prime the aluminium foil surface are commercially available from the Mica Corporation, of Stamford, Connecticut, under the trade designation MICA A—291, which is a seven precent aqueous solution of a polyacrylic acid chromium complex; it is acidic in nature and has a viscosity of about ten centipoise (10 mPa s). The MICA A—291 product literature indicates use for bonding polyethylene to aluminium foil, for packaging and industrial applications requiring high bonds and resistance to a variety of hard-to-hold materials, including fluorides and essential oils. It is not believed however, that there has heretofore been any recognition that the use of such a primer will achieve the results attained by the present invention, i.e., the development of extremely durable bonds between aluminium oil and extrusion coatings of carboxylic acid or ester-containing copolymers of ethylene, which bonds endure despite intimate contact with products considered to be of a highly degenerative nature.

Although the above-identified chromium complex is believed to be the most effective primer for use herein, other closely-related substances may be substituted if so desired. Thus, the length of the polyacrylic acid chain may vary, as may the proportion of the acrylic acid moiety in the copolymer of the ratio of the metal to the organic portion of the complex. Indeed, it is possible that other transistion metals, such as cobalt, copper, nickel, and the like, might be substituted for chromium.

As indicated above, the primer will generally be applied as a dilute water/alcohol solution, to maximize leveling and wetting of the substrate, and thereby afford optimal levels of adhesion of the polymer layer thereto. To prepare the working liquid, the commercial MICA A—291 product may suitably be mixed with additional water and isopropyl alcohol in a volumetric ratio of 30:60:10 (product to water to alcohol).

The resulting solution will be used in an amount sufficient to provide, when dried, about 0.03 to 0.08, and preferably about 0.035, pound of complex solids per ream (i.e., 3,000 square feet of surface area), (48.8 g/1000 m$^2$; 130 g/1000 m$^2$ and 57.0 g/1000 m$^2$). In any event, the primer must be of at least monomolecular thickness, and generally it will be at least somewhat heavier. After drying of the primer, typically by passage of the foil structure through an oven held at a suitable temperature, (i.e. about 250° to 400° Fahrenheit or 121° to 204°C), the web may be presented directly to a copolymer extrusion station. Then, its temperature will generally be about 100° to 150° Fahrenheit (38° to 66°C).

The techniques utilized for extrusion coating of the ethylene copolymer upon the aluminium foil are well known to those skilled in the art, and need not be discussed in detail. It should, however, be appreciated that the temperature of the melt is critical to the attainment of optimal bonding, bearing in mind that the copolymer must not only be strongly adhered to the foil, but that its capacity for self-bonding (i.e., for heat sealing) and for bonding to other portions of the ultimate container must also be preserved. Specifically, and as has been pointed out above, the laminate webs according to the invention will find their widest utility in the production of tubular containers, for which applications the web must be capable of side seaming and secure attachment to a molded headpiece. High melt temperatures favor bonding to the foil; on the other hand, they also promote oxidation, which inhibits the formation of good bonds with other polymeric surfaces (e.g., the headpiece). Consequently (and depending to an extent upon the air gap distance beyond the extruder die lips), as an example ethylene acylic acid (EAA) will generally be extruded, in the practice of the present method, at a temperature of 550° to 600° Fahrenheit (288° to 316°C). An optimum balance of bonding properties will usually be realized with a melt temperature of about 575° to 590° Fahrenheit (302° to 310°C).

While EAA or ionomer will usually constitute the layer of the laminate web ultimately destined to face the product, other copolymers of ethylene having pendant carboxylic acid or ester groups can also be used, such as copolymers with acrylic or methacrylic acids, methylacrylate, methylmethacrylate, and vinyl acetate. The technique normally used to produce the foil/copolymer composite will be extrusion coating in view of its recognized economic and practical benefits. However, other techniques may be found to be feasible under certain circumstances, and may be employed if so desired. Generally, the thickness of the product-facing polymer will range from about 1.0 to 4.0 mils (0.02 to 0.10 mm), and more commonly 1.5 to 3.0 mils (0.04 to 0.08 mm) to provide an optimal functional and economic balance.

Insofar as the foil component is concerned, as a practical matter thin-gauge (i.e., about 0.285 to 3.0 mils or 0.007 to 0.08 mm) aluminium will normally be utilized, although for certain applications foils or other metals might be substituted. The laminate web will generally contain additional polymer layers for various purposes, and a paper layer will usually be included to enable facile printing or decoration of the article. A typical laminate arrangement will comprise (from the outside in): polyethylene, paper, polyethylene, EAA, foil, primer, and lastly the EAA layer destined to face the product. Save for the foil, primer, EAA subcombination, the basic structure is conventional.

The manner in which the laminate web is converted into a container tube (e.g., head bonding, side seaming, and end sealing to form and close the tube) may be entirely conventional and known to those skilled in the art. Accordingly, a detailed description is unnecessary. It might be mentioned, however, that in forming the side seam it is common practice to overlap the edges of the web. Since this will expose both sides of the laminate to the product, advantage can be seen in priming both surfaces of the foil, in accordance herewith.

Exemplary of the efficacy of the present invention are the following specific examples:

Example One

Webs are produced utilizing a laminate subassembly comprised of layers of polymers and paper bonded to one face of 0.7 mil (0.018 mm) thick aluminium foil, the overall gauge of the subassembly being about 10.2 mils (0.26 mm). The exposed side of the foil is primed by applying, from a rotogravure cylinder, somewhat in excess of a monomolecular layer of a polyacylic acid chromium complex, using a 30:60:10 solution of MICA A—291:water:isopropyl alcohol, which is subsequently forced air dried in an oven, at about 250° Fahrenheit (121°C).

A first laminate is produced by extrusion coating the primed foil surface with 43.5 pounds per ream (70.8 kg/m$^2$) of low density polyethylene the extrudate being at a temperature of about 600° Fahrenheit (316°C). This laminate is designated "A". A second laminate, designated "B", is prepared by extrusion coating the subassembly with the same thickness of an EAA copolymer containing 3.5 percent of the acrylic acid monomer, the temperature of the melt also being about 600° Fahrenheit (316°C). A third laminate designated "C" is prepared in the same manner utilizing, in place of the 3.5 percent resin, an EAA copolymer containing 8.0 percent of the acrylic acid moiety.

The foregoing laminates are converted to small pillows measuring 1 × 5⅝ inches (2.54 × 14.3 cm), which are filled with a commercial dentifrice product (i.e., Proctor & Gamble CREST toothpaste), and are thereafter sealed. Several pillows produced from each of the three laminates are held at a controlled temperature for periods of from two weeks to six months, after which the condition of the web is determined. Specifically, five pillows of each sample are held at tempertures of 75° and 105° Fahrenheit (24° and 41°C), and three pillows of each sample are held at a temperature of 120° Fahrenheit (49°C). They are evaluated at intervals of two, four, eight, twelve, and twenty-six weeks. The results are set forth in Table One, which follows:

0 115 111

| Period (Weeks): | 2 Weeks | | | 4 Weeks | | | 8 Weeks | | | 12 Weeks | | | 26 Weeks | | |
|---|---|---|---|---|---|---|---|---|---|---|---|---|---|---|---|
| Temperature (°F): | 75 | 105 | 120 | 75 | 105 | 120 | 75 | 105 | 120 | 75 | 105 | 120 | 75 | 105 | 120 |
| LAMINATE | | | | | | | | | | | | | | | |
| A | — | — | G | — | G—E | F | G—E | F | P—F | G | F | — | G | P—F | — |
| B | — | — | G—E | — | G—E | G—E | G—E | G—E | F | G—E | G—E | — | G—E | F—G | — |
| C | — | — | G—E | — | G—E | G—E | G—E | G—E | — | G—E | G—E | — | G—E | G—E | — |

**0 115 111**

As used in the Table, the designations "E", "G", "F" and "P", mean that the condition of the web is judged to be excellent, good, fair, or poor, respectively; a dash mark indicates that no test is performed under the indicated conditions. To be considered excellent, the level of adhesion must be such that the polymer layer becomes stretched in endeavoring to separate it from the foil. Good adhesion indicates that separation is achieved and sustained only with difficulty. If the laminate offers a significant amount of resistance to separation it is deemed to be fair, and if it is easily delaminated the level of adhesion is regarded to be poor.

From Table One, it is seen that surprisingly high levels of bond strength are achieved utilizing the EAA film on the primed foil (laminates "B" and "C"), as compared to that which is exhibited when the laminated polymer is polyethylene (laminate "A"). More particularly, after storage for four weeks at 120° Fahrenheit (49°C), and 8 or 12 weeks at 105° Fahrenheit (41°C), the EAA-containing laminates both exhibit good-to-excellent adhesion, whereas the polyethylene web has only fair bond strength. While these are the most dramatic differences reflected in Table One, it can be seen that in all instances the EAA laminates are invariably superior to those made with the low density polyethylene.

In addition to the foregoing delamination tests, environmental stress cracking of the three laminate webs is evaluated by hand squeezing selected pillows. After six months storage time at 105° Fahrenheit (41°C), the pillows produced from the polyethylene web are found to be highly prone to cracking when manually squeezed. In contrast, the EAA-based laminates, conditioned in the same way, satisfactorily survive such manipulation.

Example Two

A commercial household cement product (i.e., duPont DUCO element) is sealed within pouches produced from laminates containing either 3.5 percent EAA or ionomer on aluminium foil, the polymer and foil gauges being 2.0 and 0.332 mil (0.051 and 0.008 mm), respectively, in all cases. Two versions of each laminate are produced; i.e., both with and without pretreatment of the foil with the MICA A—291 primer. The pouches are sealed and stored at a temperature of 105° Fahrenheit (41°C), different ones being opened after one and two months' storage time to assess the levels of adhesion that are maintained between the polymer layer and the foil.

After storage for one month, the webs made with the primed aluminium show good adhesion regardless of whether the polymer layer is comprised of EAA or ionomer. The unprimed aluminium, on the other hand, produces webs in which delamination (in the case of EAA) or poor adhesion (in the case of ionomer) occurs. The results are the same following the two-months storate period.

Although the foregoing specific examples demonstrate the outstanding ability of the present laminate webs to withstand the degenerative effects of a fluoride toothpaste and a household cement containing highly active organic solvents, it should be appreciated that the webs can be used advantageously for packaging a wide range of other products deemed to be difficult to contain. For example, the web according to the invention can successfully survive the degenerative effects of NOXEMA Brushless Shave Cream (Noxell Corporation); Helena Rubenstein Skin Lightener; Dap, Inc. Waterless Hand Cleaner; VAGINEX Cream (Schmid Laboratories); Plymouth Citrus Products Industrial Waterless Hand Cleaner; TURTLE WAX Auto Polish Glaze; ARTRA Skin Tone Cream (Plough Inc.); Union Carbide Corporation car polish; ABSORBINE RUB (W. F. Young, Inc.); Red Glazing Putty (Oatey Co.); LX 845 Auto Glaze (Petrolite Corporation), and Soupletube (France) Product No. 3. In all instances the degree of resistance to delamination is at a very good level, but the specific results achieved with any particular product will, of course, vary. Moreover, it will be appreciated that the foregoing list of commercial products is intended only to be exemplary, and that the laminate webs made in accordance with the present invention may be utilized with comparable advantage for many other products.

Thus, it can be seen that the present invention provides a novel laminate web comprised of aluminium foil and a layer of a copolymer of ethylene with an acrylic acid or acrylic acid ester monomer, which web is adapted for successfully containing degenerative products for extended periods of time. The invention also provides a novel container and package fabricated from such a laminate web, and novel methods for the production of such webs, containers and packages.

DUCO, NOXEMA, VAGINEX, TURTLE WAX, ARTRA, ABSORBINE RUB, AUTO GLAZE and SOUPLETUBE are believed to be registered trade marks.

**Claims**

1. A laminate web suitable for use in producing containers for degenerative products, which includes metal, e.g. aluminium, foil, wherein laminated to the foil there is a film of a copolymer of ethylene having in its molecule pendant carboxylic acid or ester groups, and wherein at least a monomolecular layer of a polyacrylic acid transition metal complex primer is disposed at the interface between the foil and the film.

2. The web according to claim 1, characterised in that the copolymer is selected from poly(ethylene/acrylic acid), poly(ethylene/methacrylic acid), poly(ethylene/methyl acrylate), poly(ethylene/methyl methacrylate), poly(ethylene/vinyl acetate), and ionomer resins.

3. The web according to claim 1 or claim 2, further characterised by including a film of a synthetic resinous polymer on the side of the foil opposite to the primer.

6

4. The web according to claim 1, 2 or 3, wherein the primer comprises a polyacrylic acid chromium complex.

5. The web according to claim 1, 2, 3 or 4, characterised in that the primer is present in an amount of 48.8 to 130 g/1000 m$^2$ of web, the copolymer film is 0.02 to 0.10 mm thick and the foil is 0.007 ot 0.08 mm thick.

6. A container for a generative product fabricated from the laminate web claimed in any of claims 1 to 5, wherein the said copolymer film is on the product-facing side thereof.

7. The container according to claim 6, characterised in that the laminate web is formed into a tubular configuration, and a headpiece is secured to one end of the tubular structure.

8. The container according to claim 7, characterised in that the headpiece is fabricated from high density polyethylene.

9. The container according to claim 7, or claim 8, characterised in that the laminate is formed into a side-seamed tube by heat sealing and the headpiece is heat sealed thereto.

10. A method for the production of laminate web suitable for use in producing containers for degenerative products, characterised by the steps including: depositing upon at least one surface of a metal, e.g. aluminium, foil substrate at least a monomolecular layer of a polyacrylic acid transition metal complex primer from an aqueous alcoholic solution, heating the thus-coated substrate to substantially dry the primer; extrusion coating a film of a copolymer of ethylene upon the primed surface, or upon at least one of the primed surfaces, of the foil, the copolymer having pendant carboxylic acid or ester groups in its molecule; and cooling the laminate to provide the web.

11. The method according to claim 10, characterised in that the copolymer is selected from poly(ethylene/acrylic acid), poly(ethylene/methacrylic acid), poly(ethylene/methyl acrylate), poly(ethylene/ methyl methacrylate), poly(ethylene/vinyl acetate), and ionomer resin.

12. The method according to claim 11, wherein the copolymer is poly(ethylene/acrylic acid), and the method being further characterised by said copolymer being extruded from an extrusion dye at a melt temperature of 232 to 316°pC (550° to 600° Fahrenheit).

13. The method according to any of claims 10 to 12, wherein the foil is coated with a polyacrylic acid chromium complex primer.

14. A method according to any of claims 10 to 13, characterised in that the web is formed into a container configuration with said copolymer film disposed on the inside thereof.

15. A method according to claim 14, characterised by forming the web into a tubular structure, and by bonding a headpiece to said web at one end of the resulting tubular structure.

16. The method according to claim 15, wherein the headpiece is fabricated from high density polyethylene.

17. A packaging method comprising the steps of forming the container as claimed in claim 14, 15 or 16 and filling the container with a degenerative product such as a dentifrice substance containing a fluoride anticaries agent.


**Patentansprüche**

1. Laminatbahn für den Einsatz bei der Herstellung von Behältern für zersetzende Produkte, die Metallfolie, beispielsweise Aluminium, auf die ein Film eines Ethylen-Copolymeren mit Carboxylsäure oder Estergruppen Substituenten im Molekül auflaminiert ist, wobei mindestens eine monomolkulare Schicht eines Polyacrylsäure-Übergangsmetall-Komplex-Primers in der Trennschict zwischen der Folie un dem Film angeordnet ist.

2. Bahn nach Anspruch 1, dadurch gekennzeichnet, daß das Copolymere ausgewählt ist aus Poly (Ethylen/Acrylsäre), Poly (Ethylen/Methacrylsäure), Poly (Ethylen/Methylacrylat), Poly (Ethylen/Methyl-methacrylat), Poly (Ethylen/Vinylacetate) und Ionomer-Harzen.

3. Bahn nach Anspruch 1 oder 2, ferner dadurch gekennzeichnet, daß die einen Film eines synthetischen Harz-Polymeren auf der dem Primer gegenüberliegenden Seite der Folie aufweist.

4. Bahn nach den Ansprüchen 1, 2 oder 3, wobei der Primer einen Polyacrylsäure-Chrom-Komplex aufweist.

5. Bahn nach den Ansprüchen 1, 2, 3 oder 4, dadurch gekennzeichnet, daß der Primer in einer Menge von 48,8 bis 130 g/1000 m$^2$ der Bahn vorhanden ist, der Copolymer-Film 0,02 bis 0,10 mm dick und die Folie 0,007 bis 0.08 mm dick ist.

6. Behälter für ein zersetzendes Produkt, hergestellt aus der in irgendeinem der Ansprüche 1 bis 5 beanspruchten Laminatbahn, wobei der Copolymer-Film sich auf der produktseitigen Seite desselben befindet.

7. Behälter nach Anspruch 6, dadurch gekennzeichnet, daß de Laminatanordnung zu einer rohrförmigen Konfiguration geformt wird, und daß ein Kopfstück an einem Einde der rohrförmigen Struktur befestigt wird.

8. Behälter nach Anspruch 7, dadurch gekennzeichnet, daß das Kofrstück aus hochdichtem Polyethylen hergestellt ist.

9. Behälter nach Anspruch 7 oder 8, dadurch gekennzeichnet, daß das Laminmat zu einer zeitlich

## 0 115 111

gesäumten Tube durch Ktizezieglen geformt wird, und daß das Kopfstück mittels Hitze an dasselbe gesiegelt wird.

10. Verfahren für die Herstellung einer für den Einsatz bei der Herstellung bon Behältern für zersetzende Produkte geeigneten Laminatanordnung, gekennzeichnet durch die Schritte, umfassend: Aufbringen mindestens einer monomolekularen Schicht eines Polyacrylsäure-übergangsmetallkomplex-Primers aus einer wässrigen, Alkholhaltigen Lösung auf mindestens eine Oberfläche eines Metallfoliensubstrats, beipielsweise Aluminium; Erhitzen des derart überzogenen Substrats, um den Primer im wesentlichen zu trocknen; Extrusionspbeschichten der Primerbehandelten Oberfläche mit einem Film eines Ethylencopolymeren auf der Primer-behandelten Oberfläche, oder auf mindestens eine der Primer-behandelten Oberflächen der Folie, wobei die Copolymere Carboxylsäure- oder Estergruppen in dem Molekül als Substituenten Aufweisen; und Abkühlen des Laminats unter Erhalt der Bahn.

11. Verfahren nach Anspruch 10, dadurch gekennzeichnet, daß das Copolymere ausgewählt wird aus Poly (Ethylen/Acrylsäure), Poly (Ethylen/Methacrylsäure), Poly (Ethylen/Methylacrylat), Poly (Ethylen/ Methylmethacrylat), Poly (Ethylen/Vinylacetat) und Ionomer-Harz.

12. Verfahren nach Anspruch 11, wobei das Copolymer Poly (Ethylen/Acrylsäure) ist und das Verfahren ferner dadurch gekennzeichnet ist, daß das Copolymere aus einer Extrusionsform mit einer Schmelztemperatur von 232 bis 316°G (550 bis 600°F.) extrudiert wird.

13. Verfahren nach einem der Ansprüche 10 bis 12, wobei die Folie mit einem Polyacrylsäure-Chrom-Komplex Primer überzogen wird.

14. Verfahren nach einem der Ansprüche 10 bis 13, dadurch gekennzeichnet, daß die Bahn zu einer Behälterform geformt wird, wobei der Copolymer-Film auf dessen Innenseite angeordnet wird.

15. Verfahren nach Anspruch 14, dadurch gekennzeichnet, daß die Anordnung zu einer rohrförmigen Struktur geformt wird, und durch Anbinden eines Kopfstückes an die Anordnung an einem Ende der entstehenden rohrförmigen Struktur.

16. Verfahren nach Anspruch 15, wobei das Kopfstück aus hochdichtem Polyethylen hergestellt ist.

17. Verpackungsverfahren mit den Schrritten: Formen des Behälters, wie in Anspruch 14, 15 oder 16 beansprucht, und Füllen des Behälters mit einem zersetzenden Produkt, wie einer Zahnpasta-Substanz mit einem Antikaries-Fluorid-Agens.

**Revendications**

1. Bande stratifiée apte à être utilisée dans la production de récipients pour produits susceptibles de dégénérer, qui comprend une feuille de métal, par exemple d'aluminium, qui porte, stratifié à elle, un film d'un copolymère d'éthylène dont la molécule renferme des groupes acide carboxylique ou ester latéraux, et au moins une couche monomoléculaire d'un complexe d'un métal de transition d'acide polyacrylique est déposée comme apprêt à l'interface entre la feuille et le film.

2. Bande suivant la revendication 1, caractérisée en ce que le copolymère est choisi entre un poly(éthylène/acide acrylique) un poly(éthylène/acide méthacrylique), un poly(éthylène/acrylate de méthyle), un poly(éthylène/méthacrylate de méthyle), un poly(éthylène/acétate de vinyle) et des résines ionomères.

3. Bande suivant la revendication 1 ou la revendication 2, caractérisée en outre en ce qu'elle comprend un film d'un polymère résineux synthétique sur le côté de la feuille opposée à l'apprêt.

4. Bande suivant la revendication 1, 2 ou 3, dans laquelle l'apprêt comprend un complexe de chrome d'acide polyacrylique.

5. Bande suivant la revendication 1, 2, 3 ou 4, caractérisée en ce que l'apprêt est présent en une quantité de 48,8 à 130 g/1000 m$^2$ de bande, le film de copolymère a une épaisseur de 0,02 à 0,10 mm et la feuille a une épaisseur de 0,077 à 0,08 mm.

6. Récipient pour produit susceptible de dégénérer, réalisé à partir de la bande stratifiée suivant l'une quelconque des revendications 1 à 5, dans lequel le film de copolymère se trouve sur son côté tourné vers le produit.

7. Récipient suivant la revendication 6, caractérisé en ce que la bande stratifiée reçoit une configuration tubulaire, et un embout est fixé à une extrémité de la structure tubulaire.

8. Récipient suivant la revendication 7, caractérisé en ce que l'embout est réalisé en polyéthylène haute densité.

9. Récipient suivant la revendication 7 ou la revendication 8, caractérisé en ce que le stratifié est réalisé en un tube soudé latéralement à la chaleur et l'embout est soudé à la chaleur au stratifié.

10. Procédé de production d'une bande stratifiée apte à être utilisée pour produite des récipients destinés à des produits susceptibles de gégénérer, caractérisé par les étapes consistant: à déposer sur au moins une surface d'un substrat formé d'une feuille métallique, par exemple d'aluminium, au moins une couche monomoléculaire d'un complexe de métal de transistion d'acide polyacrylique servant d'apprêt, à partir d'une solution alcoolique aqueuse, à chauffer le substrat ainsi revêtu pour faire pratiquement sécher l'apprêt; à appliquer par extrusion un film de revêtement de copolymère d'éthylène sur la surface apprêtée, ou sur au moins l'une des surfaces apprêtées, de la feuille, le copolymère portant dans sa molécule des groupes acide carboxylique ou ester latéraux; et à refroidir le stratifié pour former la bande.

11. Procédé suivant la revendication 10, caractérisé en ce que le copolymère est choisi entre un poly(éthylène/acide acrylique) un poly(éthylène/acide méthacrylique), un poly(éthylène/acrylate de méthyle), un poly(éthylène/méthacrylate de métyle), un poly(éthylène/acétate de vinyle) et une résine ionomère.

12. Procédé suivant la revendication 11, dans lequel le copolymère est un poly(éthylène/acide acrylique) et le procédé est en outre caractérisé en ce que ledit copolymère est extrudé par une filière d'extrusion à une température de fusion de 232 à 316°C (550 à 600° Fahrenheit).

13. Procédé suivant l'une quelconque des revendications 10 à 12, dans lequel la feuille est revêtue d'un apprêt formé d'un complexe de chrome d'acide polyacrylique.

14. Procédé suivant l'une quelconque des revendciations 10 à 13, caractérisé en ce que la bande reçoit la configuration d'un récipient avec le film de copolymère disposé à l'intérieur.

15. Procédé suivant la revendication 14, caractérisé par le fait que la bande est formée en une structure tubulaire et en ce qu'un embout et lié à la bande à une extrémité de la structure tubulaire résultante.

16. Procédé suivant la revendication 15, dans lequel l'embout est fabriqué en polyéthylène haute densité.

17. Procédé d'emballage, comprenant les étapes qui consistent à former le récipient suivant la revendication 14, 15, ou 16 et à remplir le récipient d'un produit susceptible de dégénérer tel qu'une substance dentifrice contenant un fluorure contre les caries.